# DEMANDE DE BREVET EUROPEEN

(11) **EP 4 714 918 A2**
(43) Date de publication de la demande: **25.03.2026**
(21) Numéro de dépôt: 25208481.9
(22) Date de dépôt: 20.12.2022
(51) Int. Cl.: C03C 13/06

(54) **FUSION ET FIBRAGE DE LAINE DE VERRE RECYCLÉE**

(30) Priorité: 21.12.2021 FR 2114175
(62) Demande divisionnaire de: 22847592.7
(71) Demandeur: Saint-Gobain Isover, 92400 Courbevoie (FR)
(72) Inventeur: GUILLET, Antoine, 75019 Paris (FR); JANUSZ, Marcin, 40750 KATOWICE (PL)
(74) Mandataire: Saint-Gobain Recherche

(57) **Abrégé**

L'invention concerne une composition de matières premières adaptée pour être fondue et fibrée par centrifugation externe pour l'obtention d'une laine minérale.

## Description

La présente invention concerne une composition de matières premières adaptée pour être enfournée dans un four verrier, fondue, puis fibrée par centrifugation externe. Sont également concernés les procédés de fusion et de fibrage par centrifugation externe de cette composition, ainsi que la laine minérale obtenue par ces procédés.

Il est connu de « recycler » un mélange de laine minérale en le faisant fondre dans un four verrier en vue de le fibrer de nouveau. Parmi les nombreux avantages d'un tel recyclage des déchets de laine minérale, on compte notamment l'amélioration du rendement énergétique du four verrier, le mélange de laine minérale collecté étant plus facile à fondre qu'une composition « classique » de matières premières comprenant entre autres de grandes quantités de silice.

Au sens de l'invention, un tel mélange de laine minérale comprend un ou plusieurs types de fibres issues de leur production (déchets usines), par exemple au cours de la découpe et/ou de la mise au rebut des matelas de laine minérale, ou de chantiers (déchets de chantier de construction ou déchets issus de chantiers de déconstruction) et/ou de filières de recyclage permettant de récupérer de telles fibres minérales dans des produits finaux, qu'ils soient ou non usagés. D'autres types de matières peuvent être associées aux fibres minérales, par exemple des films papier, à base d'aluminium ou bitumineux, des éléments de palettes en bois.

De telles fibres minérales peuvent en particulier être constituées de verre et/ou de roche. On parle alors respectivement de laine de verre et de laine de roche. Ces deux types de laine minérale diffèrent l'une de l'autre de par leur composition, de par leur procédé de fusion, mais aussi de par le procédé de fibrage associé.

Au sens de l'invention, une laine minérale comprend, hors encollage :
SiO2 : 30 à 75% en masse,
CaO+MgO : 5 à 40% en masse,
Al2O3 : 0 à 30% en masse,
Na2O+K2O : 0 à 20% en masse,
Oxyde de fer : 0 à 15% en masse.

Les composants principaux d'une laine de roche (également appelé « verre noir » par la personne du métier) sont, hors encollage :
SiO2 : 30 à 50% en masse,
Al2O3 : 10 à 22% en masse,
CaO+MgO : 20 à 40% en masse,
Oxyde de fer : 0 à 15% en masse,
Na2O+K2O : 1 à 10% en masse.

Par contraste, les composants principaux d'une laine de verre sont, hors encollage :
SiO2 : 50 à 75% en masse,
Al2O3 : 0 à 8% en masse, préférentiellement 0,5 à 6,0%,
CaO+MgO : 5 à 20% en masse,
Oxyde de fer : 0 à 3% en masse,
Na2O+K2O : 12 à 20% en masse,
B2O3 : 0 à 10% en masse.

La fusion de roche (basalte ou laitier de hauts fourneaux) nécessite généralement un chauffage des matières premières à des températures significativement plus élevées que la fusion de verre ordinaire. Elle est traditionnellement mise en œuvre dans des fours de type cubilot, chauffés avec de grandes quantités de coke à des températures voisines de 1500°C. Les fours à réfractaires, utilisés classiquement pour la fusion de verre, ne supportent en effet pas les températures élevées nécessaires à la fusion de la roche.

De même, les procédés de fibrage de ces laines minérales dépendent directement de leur composition respective, et ne sont donc pas interchangeables.

Ainsi, le procédé de fibrage couramment utilisé pour produire de la fibre de roche est le procédé dit par centrifugation externe. Pour ce dernier, la matière à fibrer est déversée à l'état fondu sur la bande périphérique de roues de centrifugation mues en rotation, est accélérée par ces roues, s'en détache, et est transformée pour partie en fibres sous l'effet de la force centrifuge, un courant gazeux étant émis tangentiellement à la bande périphérique des roues de manière à prendre en charge la matière fibrée en la séparant de la matière non fibrée et à l'acheminer vers un organe récepteur. On peut par exemple se reporter, pour le fibrage par centrifugation externe, à la demande de brevet EP195725.

Un tel procédé de fibrage de la laine de roche est à distinguer de celui couramment utilisé pour la fibre de verre, dit procédé de fibrage par centrifugation interne. Il consiste à introduire un filet de la matière étirable à l'état fondu dans un centrifugeur, encore appelé assiette de fibrage, tournant à grande vitesse. Une telle assiette de fibrage peut alternativement être équipée ou non d'un fond et est percée à sa périphérie par un très grand nombre d'orifices par lesquels la matière est projetée sous forme de filaments sous l'effet de la force centrifuge. Au moyen d'un brûleur de forme annulaire, ces filaments sont alors soumis à l'action d'un courant annulaire gazeux d'étirage à température et vitesse élevées (pouvant atteindre 1000°C pour la température, et 250 m/s pour la vitesse, en fonction du produit souhaité) longeant la paroi du centrifugeur qui les amincit et les transforme en fibres.

Il existe donc des différences notables entre la laine de roche et la laine de verre, tant au regard de leur composition, de leur procédé de fusion, des propriétés physiques (qui en découlent) de la matière fondue sortant du four (température, viscosité etc.), et du procédé de fibrage associé. Concernant ce dernier aspect, il convient de noter qu'un bain de roche fondue ne peut techniquement pas être fibré par centrifugation interne, de même qu'un bain de verre fondu ne peut techniquement pas être fibré par centrifugation externe.

Au regard de ces différences techniques, et dans le contexte d'un recyclage de fibres usagées, il est donc naturel pour une personne du métier de dédier le recyclage de laine de roche à la production de laine de roche exclusivement, et de dédier le recyclage de laine de verre à la production de laine de verre exclusivement, sans jamais envisager de mélanger ces deux domaines techniques distincts.

Le cloisonnement strict existant entre l'utilisation des déchets de laine de verre d'une part, et des déchets de laine de roche d'autre part, présente cependant l'inconvénient de complexifier les filières d'approvisionnement associées, en multipliant les lieux de stockage et/ou les distances de transport.

L'invention revendiquée vise à fournir une solution technique aux inconvénients décrits ci-dessus. Plus particulièrement, dans au moins un mode de réalisation, la technique proposée se rapporte à une composition de matières premières adaptée pour être fondue et fibrée par centrifugation externe pour l'obtention d'une laine minérale, caractérisée en ce qu'elle comprend entre 1 et 62% en masse de laine de verre.

Au sens de l'invention, une composition de matières premières est adaptée pour être fibrée par centrifugation externe dès lors que la température (TLog1) du bain de verre, pour une viscosité dynamique Log 1, est comprise entre 1390 °C et 1490 °C, et que la différence (TLog1 - Tlog3) entre les températures correspondant aux valeurs de viscosités Log 1 et Log 3 est comprise entre 320 °C et 390 °C. De manière connue dans le domaine de la fusion du verre, la viscosité dynamique s'exprime en N Log Poises, ce qui correspond à 10N Poises (0,1 Pa.s), chaque valeur de viscosité correspondant à une température donnée du bain de verre.

L'invention repose sur le concept nouveau et inventif consistant à introduire de la laine de verre dans une composition de matières premières destinée à être fondue puis fibrée par centrifugation externe, procédé de fibrage usuellement réservé à la production de laine de roche. L'ajout de fibres de verre qui, de par leur composition, ne sont initialement pas adaptées à un fibrage par centrifugation externe, introduit une difficulté technique supplémentaire pour une personne du métier en charge de la fusion et du fibrage. En dépit de ces difficultés techniques, un tel ajout de laine de verre permet à un opérateur de gagner en flexibilité dans le choix des matières premières à utiliser, et ainsi de saisir des opportunités pouvant être offertes temporairement par des filières de recyclage organisées à proximité des installations de fusion et de fibrage. A noter de plus qu'une personne du métier dispose des outils et connaissances générales pour, sur la base d'essais de routine et tel que détaillé dans la description, adapter le reste de la composition de sorte que cette dernière satisfasse aux spécifications techniques d'un fibrage par centrifugation externe.

Selon un mode de réalisation particulier, ladite composition de matières premières comprend un pourcentage massique de laine de verre supérieur ou égal à 3%, préférentiellement supérieur ou égal à 5%, préférentiellement supérieur ou égal à 10%, préférentiellement supérieur ou égal à 15%, préférentiellement supérieur ou égal à 20%, préférentiellement supérieur ou égal à 25%.

Selon un mode de réalisation particulier, ladite composition de matières premières comprend un pourcentage massique de laine de verre inférieur ou égal à 58%, préférentiellement inférieur ou égal à 55%, préférentiellement inférieur ou égal à 50%, préférentiellement inférieur ou égal à 45%, préférentiellement inférieur ou égal à 40%, préférentiellement inférieur ou égal à 35%.

Selon un mode de réalisation particulier, la laine de verre entrant dans ladite composition de matières premières est au moins en partie ensimée. Au sens de l'invention, l'expression « laine de verre ensimée » désigne ici de la laine minérale constituée de fibres minérales portant à leur surface un liant organique insoluble et infusible, déjà réticulé.

Selon un mode de réalisation particulier, la laine de verre entrant dans ladite composition de matières premières est au moins en partie vierge. Au sens de l'invention, l'expression « laine de verre vierge » désigne de la laine verre obtenue par centrifugation interne, dont les fibres ne sont pas liées les unes aux autres au moyen d'un liant organique, par opposition à une laine de verre ensimée. Une telle laine de verre vierge est typiquement utilisée en tant que laine à souffler pour l'isolation de combles. Les fibres de laine vierge peuvent être enrobées d'une mince couche d'ensimage ou de lubrifiant.

Selon un mode de réalisation particulier, ladite composition de matières premières comprend au moins 3% massique d'oxyde de fer, préférentiellement au moins 5% massique d'oxyde de fer.

L'accroissement de la teneur en oxyde de fer de la composition de matières premières permet après fibrage d'accroître la température maximum de service de la fibre obtenue. En d'autres termes, une telle fibre présente une meilleure tenue à des températures plus élevées.

Selon un mode de réalisation particulier, ladite composition de matières premières comprend au moins 13% massique d'alumine, préférentiellement au moins 15% massique d'alumine.

L'ajout d'alumine (oxyde d'aluminium) dans la composition permet d'améliorer sa bio solubilité.

Selon un mode de réalisation particulier, ladite laine de verre présente la composition suivante, en pourcentage massique :
SiO2 : 50 à 75%,
Al2O3 : 0 à 8%, préférentiellement 0,5 à 6,0%,
CaO+MgO : 5 à 20%,
Oxyde de fer : 0 à 3%,
Na2O+K2O : 12 à 20%,
B2O3 : 2 à 10%.

Selon un mode de réalisation particulier, ladite laine de verre présente la composition suivante, en pourcentage massique :
SiO2 : 62,5% à 66%,
Al2O3 : 1,5% à 3,1%,
CaO+MgO : 10,3 à 11,1%,
Na2O+K2O : 15,7% à 17,3%,
B2O3 : 4,3% à 7,4%.

La description détaillée fait état de trois compositions, sous les dénominations « compo n°1 », « compo n°2 » et « compo n°3 », quientrent dans cette plage de composition et sont couramment utilisées dans l'industrie de l'isolation. De tels déchets peuvent donc être collectés sur de nombreux sites de production et/ou chantiers de construction/déconstruction.

Selon un mode de réalisation particulier, ladite laine de verre présente une composition sans bore et représente moins de 48% de la masse totale de ladite composition de matières premières.

Une telle composition de laine de verre est connue sous la désignation « zero-bore », et trouve une application dans l'industrie de l'isolation.

Selon un mode de réalisation particulier, ladite composition de matières premières comprend du calcin ménager et/ou de verre plat.

L'ajout de calcin ménager et/ou de verre plat permet de gagner en flexibilité dans le choix des matières premières à utiliser. Une fois encore, il est à noter qu'une personne du métier dispose des connaissances générales pour, sur la base d'essais de routine, adapter le reste de la composition de sorte que cette dernière satisfasse aux spécifications techniques d'un fibrage par centrifugation externe.

L'invention se rapporte de plus à un procédé comprenant une étape de fusion dans un four verrier d'une telle composition de matières premières.

De manière connue, une telle composition de matières premières peut être fondue dans un four verrier à brûleurs immergés et/ou émergés, dans un four électrique, et/ou dans un four hybride mettant à la fois en œuvre au moins un brûleur et des électrodes. En sortie de four, la composition fondue peut soit être immédiatement fibrée par centrifugation externe, soit être refroidie et transformée en calcin, pour être plus tard (de manière subséquente) de nouveau fondue et fibrée par centrifugation externe pour l'obtention d'une laine minérale.

L'invention se rapporte de plus à un procédé de fabrication de laine minérale caractérisé en ce qu'il met en œuvre un tel procédé de fusion et une étape subséquente de fibrage par centrifugation externe de la composition de matières premières fondue.

L'invention se rapporte de plus à une laine minérale obtenue selon un tel procédé de fabrication.

Comme détaillé dans les exemples de la description, une telle laine minérale tend de par sa composition à se distinguer des laines usuellement fibrées par centrifugation externe, ce qui permet de la distinguer de ces dernières.

D'autres caractéristiques et avantages de l'invention apparaîtront à la lecture de la description suivante de modes de réalisation particuliers, donnés à titre de simples exemples illustratifs et non limitatifs, et des figures annexées, pour lesquelles :

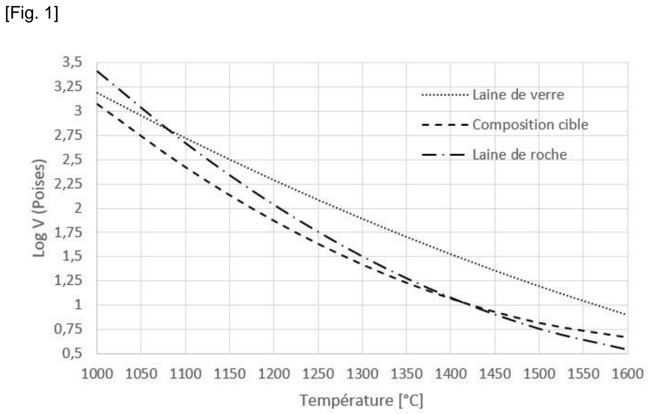

[Fig. 1] La figure 1 est une représentation graphique de la valeur de viscosité dynamique d'une composition de matières premières selon un mode de réalisation particulier de l'invention, en fonction des variations de température.

Plusieurs modes de réalisation particuliers de l'invention sont présentés par la suite. Il est entendu que la présente invention n'est nullement limitée par ces modes de réalisation particuliers et que d'autres modes de réalisation peuvent parfaitement être mis en œuvre.

Une méthode générale pouvant être mise en œuvre par un opérateur de four pour élaborer une composition selon l'invention est détaillée dans la suite de la description.

Au cours d'une première étape, une composition cible qui satisfait les critères de viscosité pour être fibrée par centrifugation externe est sélectionnée. Au sens de l'invention, une telle composition est adaptée pour être fibrée par centrifugation externe si la température (TLog1) du bain de verre pour une viscosité dynamique Log 1 est comprise entre 1390 °C et 1490 °C, et si la différence de température (TLog1 - Tlog3) entre les viscosités Log 1 et Log 3 est comprise entre 320 °C et 390 °C.

Afin d'aider à la sélection de cette composition cible, un opérateur de four fait appel à des modèles mettant en relation la composition chimique et la viscosité dynamique d'un mélange, tels que ceux communément utilisés par les industries du verre.

Dans un contexte industriel et de manière connue, d'autres considérations peuvent également être pris en compte dans la sélection de la composition cible, tels que le coût final de la composition, l'énergie requise pour la fusion de cette dernière, et le respect de certaines plages de concentration en composés chimiques.

Au cours d'une deuxième étape, l'opérateur élabore son mélange en prenant en compte la composition chimique respective de chacune des matières premières à sa disposition, et ajuste les proportions relatives de chacune de ces matières premières pour obtenir la composition cible.

Ces matières premières peuvent alternativement ou en combinaison se présenter sous la forme d'oxydes purs, de pierres naturelles (sables siliciques, dolomite, calcaire, stériles, scories, bauxite blanche, feldspath, anorthosite etc.) qui sont déjà des combinaisons d'oxydes, de déchets de laine de verre et/ou de roche, qui peuvent être issus de la production desdites fibres ou de chantiers (construction ou déconstruction), de combustibles liquides ou solides éventuels (plastique de matériau composite ou non, matières organiques, charbons), et de tout type de calcin. Sont également inclus des matériaux recyclables contenant des éléments combustibles (organiques) tels que par exemple, les fibres minérales ensimées, avec liant (du type de celles utilisées dans l'isolation thermique ou acoustique ou de celles utilisées dans le renforcement de matière plastique), les vitrages feuilletés avec des feuilles de polymère du type polyvinylbutyral tels que des parebrises, des bouteilles en verre (calcin ménager), ou tout type de matériau " composite " associant du verre et des matériaux plastiques tels que certaines bouteilles. Sont également recyclables les " composites verre-métal ou composés métalliques " tels que vitrages fonctionnalisés avec des revêtements contenant des métaux.

A noter que selon un mode de réalisation alternatif, un opérateur commence par prendre en compte la composition respective de chacune des matières premières à sa disposition pour par la suite ajuster les proportions relatives de ces dernières et, de manière empirique, déterminer et obtenir une composition cible qui, sur la base des modèles à sa disposition, satisfait aux critères de viscosité pour être fibrée par centrifugation externe.

Une fois la composition cible obtenue, elle est enfournée dans un four verrier pour y être fondue. La composition ainsi fondue est par la suite fibrée par centrifugation externe afin de former une laine minérale.

A titre d'exemple purement illustratif et non limitatif, la composition cible suivante est sélectionnée par un opérateur de four :
SiO2 : 45,1% en masse,
Fe2O3 : 2,2% en masse,
Al2O3 : 7,8% en masse,
CaO : 23,0% en masse,
MgO : 11,0% en masse,
Na2O : 8,5% en masse,
K2O : 1,5% en masse.

Afin d'obtenir cette composition cible, et selon ce mode de réalisation particulier, l'opérateur dispose comme matières premières de dolomite, de stériles (« slag » en langue anglaise) et de laine de verre, dont les compositions respectives sont détaillées dans le Tableau 1 ci-dessous. Les proportions massiques (%m) de chacune de ces matières premières sont ajustées, tels que mentionné dans le Tableau 1 [Tableaux 1], pour l'obtention de la composition cible. [Tableaux 1]

**Tableau 1 : Compositions et concentrations massiques de matières premières pour l'obtention d'une composition cible**

| | %m | SiO2 | Fe2O3 | Al2O3 | CaO | MgO | Na2O | K2O |
|---|---|---|---|---|---|---|---|---|
| Dolomite | 17% | 5,5 | 1,2 | 1,8 | 33 | 15 | 0,1 | 0,4 |
| Stériles | 23% | 38,8 | 0,1 | 9,2 | 41,8 | 7 | 0,4 | 0,6 |
| Laine de verre | 60% | 53 | 3 | 8 | 10 | 10 | 12 | 2 |
| Composition cible | | 45,1 | 2,2 | 7,8 | 23,0 | 11,0 | 8,5 | 1,5 |

En se basant sur un modèle communément utilisé par les industries du verre, l'opérateur détermine la valeur de viscosité dynamique de la composition cible, en fonction de la variation de sa température. A noter que cette composition cible comprend 60% en masse de laine de verre.

A titre de comparaison, sont également calculées les valeurs de viscosité dynamique, en fonction des variations de température :
- de la laine de verre dont la composition est donnée au Tableau 1,
- d'une laine de roche standard, dont la composition massique est SiO2 : 37%m ; Fe2O3 : 5%m ; Al2O3 : 21%m ; CaO : 20%m ; MgO : 14%m ; Na2O : 2%m ; K2O : 1%m.

L'ensemble des valeurs de viscosité dynamique (en Log V) obtenues pour chacune de ces trois compositions est détaillé dans le tableau 2 [Tableaux 2] ci-dessous, et représenté graphiquement à la Figure 1.

**Tableau 2 : Valeurs de viscosité dynamique (en Log V) en fonction de la composition chimique du mélange et de sa température (en °C)**

| Température | Laine de verre | Laine de roche | Composition cible |
|---|---|---|---|
| 1000°C | 3,184 | 3,411 | 3,069 |
| 1100°C | 2,719 | 2,671 | 2,419 |
| 1200°C | 2,288 | 2,036 | 1,869 |
| 1300°C | 1,891 | 1,506 | 1,419 |
| 1400°C | 1,528 | 1,081 | 1,069 |
| 1500°C | 1,199 | 0,761 | 0,819 |
| 1600°C | 0,904 | 0,546 | 0,669 |

Le tableau 3 [Tableaux 3] ci-dessous nous renseigne sur les valeurs de température TLog 1 et TLog 3 (en °C) correspondant respectivement à des valeurs de viscosité dynamique de Log 1 et Log 3 obtenues pour ces mêmes compositions.

**Tableau 3 : Valeurs de température (en °C) en fonction de la composition chimique du mélange et de sa viscosité dynamique (en Log V)**

| | Laine de verre | Laine de roche | Composition cible |
|---|---|---|---|
| Tlog 1 | 1563°C | 1417°C | 1390°C |
| Tlog 3 | 1036°C | 1062°C | 1000°C |
| Tlog1 - Tlog3 | 528°C | 355°C | 390°C |

Contrairement à la composition de laine de verre, la composition cible et la composition de laine de roche présentent toutes deux une température Tlog1 comprise entre 1390 °C et 1490 °C, ainsi qu'une différence de température (TLog1 - TLog3) comprise entre 320 °C et 390 °C. Ces deux compositions satisfont donc les critères de viscosité dynamique pour être fibrées par centrifugation externe.

Selon d'autres modes de réalisation particuliers de l'invention, les déchets de laine de verre à disposition de l'opérateur présentent 3 (trois) compositions chimiques distinctes qui sont détaillées dans le tableau 4 [Tableaux 4] ci-dessous, et dont les références sont compo n°1, compo n°2 et compo n°3 :

**Tableau 4 : Compositions chimiques de trois laines de verre**

| | SiO2 | Al2O3 | CaO | MgO | Na2O | K2O | B2O3 | P2O5 |
|---|---|---|---|---|---|---|---|---|
| Compo n°1 | 65,3 | 2,1 | 8,1 | 2,4 | 16,4 | 0,7 | 4,5 | |
| Compo n°2 | 65,5 | 1,7 | 7,5 | 3,0 | 16,4 | 0,7 | 4,9 | 0,12 |
| Compo n°3 | 63,0 | 2,9 | 7,4 | 3,5 | 15,2 | 0,7 | 7,2 | |

Partant de chacune de ces compositions de laine de verre, en y ajoutant des oxydes purs et en tenant compte les combinaisons d'oxydes limitant, les inventeurs ont pu obtenir des compositions cibles qui présentent une concentration massique maximale en fibres de verre, tout en satisfaisant les critères de viscosité nécessaires à un fibrage par centrifugation externe.

L'ensemble de ces données est détaillé dans le tableau 5 [Tableaux 5] ci-dessous :

**Tableau 5 : Concentrations massique maximale en laine de verre de 3 compositions cible, viscosités dynamiques et températures correspondantes**

| Référence de laine de verre | Compo n°1 | Compo n°2 | Compo n°3 |
|---|---|---|---|
| Concentration massique maximale de laine de verre | 57% | 57% | 61% |

| Composition cible (en pourcentage massique %m) | | | |
|---|---|---|---|
| SiO2 | 48,3 | 48,3 | 46,3 |
| Al2O3 | 3,1 | 2,8 | 3,5 |
| CaO | 35,2 | 34,9 | 34,4 |
| MgO | 1,4 | 1,7 | 2,1 |
| Na2O | 9,1 | 9,0 | 8,8 |
| K2O | 0,4 | 0,4 | 0,4 |
| B2O3 | 2,6 | 2,8 | 4,4 |
| P2O5 | | 0,1 | |

| Viscosité dynamique vs. Température | | | |
|---|---|---|---|
| TLog 1 | 1390°C | 1390°C | 1390°C |
| TLog 3 | 1000°C | 1000°C | 1000°C |
| TLog1-TLog3 | 390°C | 390°C | 390°C |

L'analyse des résultats obtenus nous permet de conclure que chacune des trois compositions cible détaillées dans le tableau 5 présente une température Tlog1 comprise entre 1390 °C et 1490 °C, ainsi qu'une différence de température (TLog1 - TLog3) comprise entre 320 °C et 390 °C. Ces trois compositions cible satisfont donc le critère de viscosité dynamique pour être fibrées par centrifugation externe.

### Objets

Objet 1. Composition de matières premières adaptée pour être fondue et fibrée par centrifugation externe pour l'obtention d'une laine minérale, caractérisée en ce qu'elle comprend entre 1 et 62% en masse de laine de verre.

Objet 2. Composition de matières premières selon l'objet 1, caractérisée en ce qu'elle comprend au moins 3% massique d'oxyde de fer, préférentiellement au moins 5% massique d'oxyde de fer.

Objet 3. Composition de matières premières selon l'objet 1 ou 2, caractérisée en ce qu'elle comprend au moins 13% massique d'alumine, préférentiellement au moins 15% massique d'alumine.

Objet 4. Composition de matières premières selon l'un des objets 1 à 3, caractérisée en ce que la laine de verre présente la composition suivante, en pourcentage massique :
SiO2 : 50 à 75%,
Al2O3 : 0 à 8%, préférentiellement 0,5 à 6,0%,
CaO+MgO : 5 à 20%,
Oxyde de fer : 0 à 3%,
Na2O+K2O : 12 à 20%,
B2O3 : 2 à 10%.

Objet 5. Composition de matières premières selon l'objet 4, caractérisée en ce que la laine de verre présente la composition suivante, en pourcentage massique :
SiO2 : 62,5% à 66%,
Al2O3 : 1,5% à 3,1%,
CaO+MgO : 10,3 à 11,1%,
Na2O+K2O : 15,7% à 17,3%,
B2O3 : 4,3% à 7,4%.

Objet 6. Composition de matières premières selon l'un des objets 1 à 3, caractérisée en ce que ladite laine de verre présente une composition sans bore et représente moins de 48% de la masse totale de ladite composition de matières premières.

Objet 7. Composition de matières premières selon l'un des objets 1 à 6, caractérisée en ce qu'elle comprend du calcin ménager et/ou de verre plat.

Objet 8. Procédé comprenant une étape de fusion dans un four verrier d'une composition de matières premières selon l'un des objets 1 à 7.

Objet 9. Procédé de fabrication de laine minérale caractérisé en ce qu'il met en œuvre un procédé de fusion selon l'objet 8, et une étape subséquente de fibrage par centrifugation externe de la composition de matières premières fondue.

Objet 10. Laine minérale obtenue selon un procédé de fabrication selon l'objet 9.

## Revendications

1. Composition de matières premières adaptée pour être fondue et fibrée par centrifugation externe pour l'obtention d'une laine minérale, **caractérisée en ce qu'**elle comprend entre 1 et 62% en masse de laine de verre.

2. Composition de matières premières selon la revendication 1, **caractérisée en ce qu'**elle comprend au moins 3% massique d'oxyde de fer, préférentiellement au moins 5% massique d'oxyde de fer.

3. Composition de matières premières selon l'une des revendications 1 et 2, **caractérisée en ce qu'**elle comprend au moins 13% massique d'alumine, préférentiellement au moins 15% massique d'alumine.

4. Composition de matières premières selon l'une des revendications 1 à 3, **caractérisée en ce que** la laine de verre présente la composition suivante, en pourcentage massique :
SiO2 : 50 à 75%,
Al2O3 : 0 à 8%, préférentiellement 0,5 à 6,0%,
CaO+MgO : 5 à 20%,
Oxyde de fer : 0 à 3%,
Na2O+K2O : 12 à 20%,
B2O3 : 2 à 10%.

5. Composition de matières premières selon la revendication 4, **caractérisée en ce que** la laine de verre présente la composition suivante, en pourcentage massique :
SiO2 : 62,5% à 66%,
Al2O3 : 1,5% à 3,1%,
CaO+MgO : 10,3 à 11,1%,
Na2O+K2O : 15,7% à 17,3%,
B2O3 : 4,3% à 7,4%.

6. Composition de matières premières selon l'une des revendications 1 à 3, **caractérisée en ce que** ladite laine de verre présente une composition sans bore et représente moins de 48% de la masse totale de ladite composition de matières premières.

7. Composition de matières premières selon l'une des revendications 1 à 6, **caractérisée en ce qu'**elle comprend du calcin ménager et/ou de verre plat.

8. Procédé comprenant une étape de fusion dans un four verrier d'une composition de matières premières selon l'une des revendications 1 à 7.

9. Procédé de fabrication de laine minérale **caractérisé en ce qu'**il met en œuvre un procédé de fusion selon la revendication 8, et une étape subséquente de fibrage par centrifugation externe de la composition de matières premières fondue.

10. Laine minérale obtenue selon un procédé de fabrication selon la revendication 9.
